# EUROPÄISCHE PATENTSCHRIFT

(11) **EP 2 022 924 B1**
(45) Veröffentlichungstag und Bekanntmachung des Hinweises auf die Patenterteilung: **03.08.2011**
(21) Anmeldenummer: 07015820.9
(22) Anmeldetag: 10.08.2007
(51) Int. Cl.: E06B 3/263

(54) **Flügelrahmen für ein Glasfenster oder eine Glastür, Blendrahmen und Fenstersystem**
Leaf frame for a glass window or a glass door, blind frame and window system
Chambranle pour une fenêtre ou une porte en verre, dormant et système de fenêtre

(43) Veröffentlichungstag der Anmeldung: 11.02.2009
(73) Patentinhaber: Unilux AG, 54528 Salmtal (DE)
(72) Erfinder: Kölzer, Stefan, 56865 Blankenrath (DE); Meeth, Alfred, 54498 Piesport (DE)
(74) Vertreter: von Hellfeld, Axel

(56) Entgegenhaltungen:
- DE-A1- 10 058 639
- DE-A1- 10 060 461
- DE-A1- 19 843 049
- DE-A1- 19 963 000
- DE-U1- 20 208 153
- DE-U1- 29 900 623
- DE-U1-202004 004 876

## Beschreibung

Die vorliegende Erfindung betrifft einen Flügelrahmen für ein Glasfenster oder eine Glastür, einen Blendrahmen und ein Fenstersystem.

Eine Vielzahl von Konstruktionen für Flügelrahmen, sogenannte Flügelkanteln, und Blendrahmen sind bekannt. Da bei modernen Bauten Glasfenster und Glastüren einen hohen Anteil der Außenfläche ausmachen, wird an Flügelrahmen, Blendrahmen, Glasfenster und Glastüren eine hohe Anforderung hinsichtlich ihrer Wärmedämmung gestellt. Insbesondere ist es gewünscht, dass die Flügelrahmen, Blendrahmen, Glasfenster und Glastüren einen geringen Wärmedurchgangskoeffizienten bzw. Wärmedämmwert U (früher k-Wert) aufweisen.

So sind Holz-Alu-Fenstersysteme bekannt, bei denen Dämmmaterialien unter der Aluabdeckung des Flügelrahmens angebracht sind. Solche Flügelrahmen haben jedoch den Nachteil, dass der Alurahmen mit dem dahinter liegenden Dämmmaterial nur schwer, oder überhaupt nicht, von dem Flügelrahmen abgenommen werden kann. Oft ist der Alurahmen mit dem Flügelrahmen verklebt. Folglich ist es nicht möglich, den Flügelrahmen innen zu reinigen oder eine defekte Glasscheibe auszutauschen.

Zusätzlich besteht bei neuen Fenstern der Wunsch, die Glasfläche des Fensters zu maximieren. Bei vorgegebener Dimensionierung der Fensterzarge, z.B. bei Einbau in einen Altbau, besteht somit für den Flügelrahmen die Vorgabe, diesen mit möglichst kleinem Querschnitt zu konstruieren. Aufgrund der minimal zu haltenden Dimensionierung des Flügelrahmens sind bekannte Flügelrahmen lediglich hinsichtlich eines niedrigen Wärmedurchgangskoeffizienten optimiert. Wegen des wichtiger erachteten Erfordernisses der hohen Wärmedämmung weisen solche bekannten Flügelrahmen jedoch nicht die gewünschte Stabilität auf. Das gleiche Problem ergibt sich bei Blendrahmen.

Die Druckschrift DE 198 43 049 A1 offenbart einen Flügelrahmen mit einer Dreilagen-Wärmeschichtanordnung. Zwischen einer Dreifach-Wärmexhutzverglasung und der Wärmeschichtanordnung sind Abstandshalter zum Halten der Verglasung in dem Flügelrahmen angeordnet.

Die Druckschrift DE 100 58 639 A1 offenbart einen Flügelrahmen mit einer Sandwich-Schichtanordnung. Zwischen der Sandwich-Schichtanordnung und einer Mehrschicht-Fensterscheibe ist eine Glashalteleiste umfassend eine Korkschicht zum Halten der Mehrschicht-Fensterscheibe angeordnet. Mit Hilfe der Korkschicht wird eine Ausbildung von Kältebrücken reduziert.

Es ist demgegenüber eine Aufgabe der vorliegenden Erfindung, einen Flügelrahmen für ein Glasfenster oder eine Glastür bereitzustellen, der hinsichtlich der Wärmedämmung und der Stabilität optimiert ist.

Diese Aufgabe wird durch einen Flügelrahmen für ein Glasfenster oder eine Glastür mit den Merkmalen des Anspruchs 1 gelöst.

Der erfindungsgemäße Flügelrahmen für ein Glasfenster oder eine Glastür weist eine zwischen zwei Holzprofilen liegende Dämmstofflagenanordnung auf. Die Dämmstofflagenanordnung weist mindestens eine erste Dämmschicht, die auf hohe Festigkeit ausgelegt ist und mindestens eine zweite Dämmschicht, die auf hohe Wärmedämmung ausgelegt ist, auf. Zwischen den zwei Holzprofilen erstreckt sich im Wesentlichen senkrecht zu der Erstreckungsrichtung der Dämmstofflagenanordnung eine seitliche Dämmschicht, die auf hohe Wärmedämmung ausgelegt ist.

Der erfindungsgemäße Flügelrahmen hat den Vorteil, dass die Dämmstofflagenanordnung zusammen mit der seitlichen Dämmschicht einen niedrigen Wärmedurchgangskoeffizienten ermöglicht. Zusätzlich wird insbesondere durch die seitliche Dämmschicht und die Vorsehung von Dämmstoffen mit unterschiedlichem Aufbau eine hohe Festigkeit des Flügelrahmens ermöglicht. Des weiteren kann durch die kompakte Bauweise der Struktur des erfindungsgemäßen Flügelrahmens ein Fenstersystem mit geringer Bautiefe, d.h. schlanken Profilen, ermöglicht werden. Solche Fenstersysteme mit geringer Bautiefe bei hoher Wärmedämmung und gleichzeitig hoher Rahmensteifigkeit werden insbesondere für Fenster gewünscht, welche in Altbauten eingebaut werden, da bei solchen Altbauten die ursprüngliche Fenstergröβe zumeist gering ist, und somit die Größe des Fensterglases maximal gehalten werden soll. Durch den erfindungsgemäßen Flügelrahmen werden diese Erfordernisse erfüllt. Auch bei wärmegedämmten Neubauten kann der erfindungsgemäße Flügelrahmen verteilhaft eingesetzt werden.

Darüber hinaus kann die erfindungsgemäße Struktur für den Flügelrahmen in einem einbaufähigen Bauelement eingesetzt werden. Dies hat den Vorteil, dass kein Halbzeug verwendet wird, welches vor Einbau in das Gebäude noch zusammengesetzt werden muss.

Ferner lassen sich durch die erfindungsgemäße Struktur des Flügelrahmens Standardgrößen von Flügelrahmen bei maximal gehaltener Fensterglasfläche, optimierter Wärmedämmung und optimierter Festigkeit herstellen. Dadurch, dass der optimierte Flügelrahmen immer noch Standardgrößen aufweist, ist er ohne Konstruktionsänderungen zu auf den Markt erhältlichen Zubehör- bzw. Ausstattungsprogrammen, beispielsweise Rollläden oder Sonnenschutzsystemen, kompatibel.

Ein weiterer Vorteil ist, dass der Flügelrahmen bei hoher Wärmedämmung und hoher Festigkeit kein erhöhtes Gewicht gegenüber bekannten Flügelrahmen aufweist. Fenstermonteure sind darauf angewiesen, dass sie die Fenster auf einfache Weise in Gebäude einbauen können. Bei der Montage hat das Gewicht des Fensters eine entscheidende Bedeutung für die Dauer des Einbaus in das Gebäude. Aufgrund des erfindungsgemäß gering gehaltenen Gewichts des Flügelrahmens kann auf den Einsatz von Transport- oder Haltemaschinen beim Einbau des Fensters verzichtet werden. Darüber hinaus fallen keine erhöhten Transportkosten an.

Bei einer vorteilhaften Ausführungsform der vorliegenden Erfindung weist die Dämmstofflagenanordnung eine dritte Dämmschicht auf, die auf hohe Festigkeit ausgelegt ist, wobei die zweite Dämmschicht zwischen der ersten und der dritten Dämmschicht liegt. Eine solche dritte Dämmschicht, die auf hohe Festigkeit ausgelegt ist, liefert eine zusätzliche Stabilität des Flügelrahmens. Versuche und Messungen haben ergeben, dass insbesondere die Kombination aus einer Dämmstofflagenanordnung mit zwei außen liegenden Dämmschichten, die auf hohe Festigkeit ausgelegt sind, eine zweite dazwischenliegende Dämmschicht, die auf hohe Wärmedämmung ausgelegt ist, und eine seitlich angeordnete weitere Dämmschicht, die auf hohe Wärmedämmung ausgelegt ist, eine optimale Kombination aus Wärmedämmung und Festigkeit bieten.

Bevorzugt ist die dritte Dämmschicht in einer Nut in einem der beiden Holzprofile eingesetzt. Durch die Vorsehung einer Nut in einem der beiden äußeren Holzprofile kann die dritte Dämmschicht, und somit die gesamte Dämmstofflagenanordnung, stabil in dem Flügelrahmen fixiert werden. Dies liefert einen weiteren Vorteil hinsichtlich der Stabilität des erfindungsgemäßen Flügelrahmens.

Gemäß einer bevorzugten Ausführungsform der vorliegenden Erfindung liegt die seitliche Dämmschicht zumindest an der ersten und zweiten oder der zweiten und dritten Dämmschicht an und deckt zumindest eine der seitlichen Nahtstellen zwischen der ersten und zweiten oder der zweiten und dritten Dämmschicht ab. Die seitliche Dämmschicht ist folglich entlang den Nahtstellen, d.h. den Verbindungsstellen der einzelnen Schichten der Sandwichstruktur der Dämmstofflagenordnung, angeordnet. Die Verbindungsstellen zwischen den einzelnen Schichten der Dämmstofflagenanordnung sind hinsichtlich Wärmedämmung und Festigkeit die schwächsten Stellen. Durch die Anordnung der seitlichen Dämmschicht an diesen Verbindungsstellen wird die Wärmedämmung und Festigkeit an den Verbindungsstellen, und somit in der gesamten Anordnung, erhöht. Folglich liefert die seitliche Dämmschicht zum einen eine erhöhte Festigkeit und zum anderen eine erhöhte Wärmedämmung. Darüber hinaus wird durch die Abdeckung der Nahtstellen auch das Eindringen von Feuchtigkeit und Insekten in die Nahtstellen verhindert.

Um die Stabilität und Wärmedämmung der erfindungsgemäßen Struktur weiter zu erhöhen sind bevorzugt die seitliche Dämmschicht und die Dämmschichten der Dämmstofflagenanordnung mit Hilfe eines Klebemittels haftfest verbunden. Bei dem Klebemittel handelt es sich bevorzugt um einen 1-Komponenten PUR-Kleber und/oder einen 2-Komponenten PVAC-Kleber, der auch als Weißleim bekannt ist.

Gemäß einer bevorzugten Ausführungsform der vorliegenden Erfindung ist die seitliche Dämmschicht zwischen der Verglasung des Glasfensters oder der Glastür und der Dämmstofflagenanordnung angeordnet. Somit liefert die seitliche Dämmschicht im eingebauten Zustand in den Flügelrahmen eine Wärmedämmung zwischen Außenraum und Innenraum. Die seitliche Dämmschicht deckt insbesondere die bei geschlossenem Fenster nach außen gerichteten seitlichen Nahtstellen der Dämmstofflagenanordnung ab und liefert somit eine vorteilhafte Wärmedämmung.

Gemäß einer Weiterbildung der vorliegenden Erfindung sind zwischen der seitlichen Dämmschicht und der Verglasung des Glasfensters oder der Glastür Abstandselemente angeordnet. Diese Abstandselemente liefern eine weitere Festigkeit der Flügelrahmenkonstruktion. Es besteht auch die Möglichkeit, die Scheiben zu verkleben. Dies liefert eine weitere Stabilität, da die Scheiben die Statik mit übernehmen.

Weiter bevorzugt sind die Dämmschichten der Dämmstofflagenanordnung mit Hilfe eines Klebemittels haftfest miteinander verbunden. Bei dem Klebemittel kann es sich wiederum bevorzugt um einen 1-Komponenten PUR-Kleber und/oder einen 2-Komponenten PVAC-Kleber handeln, der auch als Weißleim bekannt ist.

Um den Flügelrahmen auf einfachere Weise herstellen zu können, ist die Dämmstofflagenanordnung zumindest teilweise an ihrer der seitlichen Dämmschicht gegenüberliegenden Seite von einem dritten Holzprofil abgedeckt. Weiter bevorzugt ist der Flügelrahmen bei der Herstellung zumindest an den Stellen mit einer Fräse bearbeitet worden, an denen er eine Holzummantelung aufweist. Eine Holzummantelung hat grundsätzlich den Vorteil, dass eine gewünschte äußere Form des Flügelrahmens auf einfachere Weise als z. B. bei einer Kunststoffummantelung hergestellt werden kann. Dies ist dadurch begründet, dass Holz einfacher als Kunststoff oder Dämmmaterial bearbeitet und geformt werden kann. Für eine Bearbeitung der Holzummantelung, beispielsweise mit einer Fräse, können darüber hinaus einfachere, d.h. kostengünstigere, Werkzeuge als bei der Kunststoffbearbeitung verwendet werden. Dies verringert die Herstellungskosten. Darüber hinaus wird für das Abfräsen von Teilen der Holzummantelung auch nur eine geringere Zeit als bei der Kunststoffbearbeitung benötigt. Dies liefert einen weiteren Kostenvorteil bei der Herstellung des erfindungsgemäßen Flügelrahmens gegenüber bekannten Flügelrahmenstrukturen. Die vorliegende Erfindung ist nicht auf die Holzbearbeitung durch Fräsen beschränkt. Grundsätzlich kann jede Art von Holbearbeitung verwendet werden, welche die Holzprofile in die gewünschte Form bringt.

Gemäß einer Weiterbildung der vorliegenden Erfindung weist die dritte Dämmschicht an ihrer der seitlichen Dämmschicht gegenüberliegenden Seite eine Nut auf, in der Fensterbeschläge angeordnet sind, wobei die Fensterbeschläge nach außen von einem Schließblech abgedeckt sind. Durch die Anordnung der Fensterbeschläge in einer Nut der dritten Dämmschicht wird eine kompakte Bauweise des Flügelrahmens ermöglicht. Das Schließblech hält die Fensterbeschläge in der Nut.

Gemäß einer weiteren bevorzugten Ausführungsform der vorliegenden Erfindung weist der Flügelrahmen ferner einen abnehmbaren Alurahmen auf, der bei geschlossenem Glasfenster bzw. geschlossener Glastür über zwei Dichtungselemente eine äußere Abdeckung des Bereichs zwischen Verglasung und Alurahmen der zum Flügelrahmen gehörigen Fensterzarge bereitstellt. Gemäß dieser bevorzugten Ausführungsform wird ein Holz-Alu-Flügelrahmen vorgeschlagen, bei dem auf einfache Weise der Alurahmen, der der ständigen Witterung ausgesetzt ist, abgenommen und ausgetauscht werden kann. Dazu ist bevorzugt unter dem Alurahmen ein Drehverbinder angeordnet, der in das äußere Holzprofil eingreift. Durch Drehen des Drehverbinders kann der Alurahmen gelöst und von dem Flügelrahmen abgenommen werden. Dadurch ist es auf einfache Weise möglich, den Flügelrahmen zu reinigen und/oder erblindete Fenstergläser auszutauschen. Die vorliegende Erfindung ist nicht auf Verbindung mit Hilfe eines Drehverbinders beschränkt. Grundsätzlich kann jeder Befestigungsmechanismus verwendet werden, welcher ein Abnehmen des Alurahmens ermöglicht.

Gemäß einer weiteren bevorzugten Ausführungsform der vorliegenden Erfindung weist das an der ersten Dämmschicht anliegende Holzprofil eine Tropfkante auf.

Durch die Tropfkante wird eine vorteilhafte Entwässerung des Flügelrahmens ermöglicht. Dadurch wird eine optimale Entwässerung der Verglasung bereitgestellt.

Hinsichtlich der Dämmschichten kann die erste und dritte Dämmschicht aus einem hochdruckfesten Polyurethan-Hartschaum mit einer Massendichte von 400 kg/m³ bis 600 kg/m³ und die zweite und die seitliche Dämmschicht aus einem Polyurethan-Hartschaum mit einer Massendichte von 60 kg/m³bis 200 kg/m³ bestehen. Bevorzugt bestehen die erste und dritte Dämmschicht aus einem hochdruckfesten Polyuhrethan-Hartschaum mit einer Massendichte von ungefähr 450 kg/m³ und die zweite und die seitliche Dämmschicht aus einem Polyuhrethan-Hartschaum mit einer Massendichte von ungefähr 80 kg/m³. Versuche haben ergeben, dass ein Polyuhrethan-Hartschaum mit einer Massendichte von ungefähr 450 kg/m³ eine für den Flügelrahmen optimale Festigkeit liefert und ein Polyuhrethan-Hartschaum mit einer Massendichte von ungefähr 80 kg/m³ eine optimale Wärmedämmung bei geringem U-Wert ermöglicht. Diese Massendichteangaben sind jedoch nicht exakt auf die angegeben Werte begrenzt. Wie für den Fachmann ersichtlich ist, sind geringe Abweichungen im Rahmen der Erfindung möglich.

Hinsichtlich der Geometrie der Dämmschichten weist die erste Dämmschicht bevorzugt eine Schichttiefe von ungefähr 11 mm, die zweite Dämmschicht eine Schichttiefe von ungefähr 7,5 mm, die dritte Dämmschicht eine Schichttiefe von ungefähr 18,5 mm und die seitliche Dämmschicht eine Schichttiefe von ungefähr 11 mm auf. Weiter bevorzugt weist die erste, zweite und dritte Dämmschicht eine Schichtbreite von ungefähr 30 mm oder 65 mm und die seitliche Dämmschicht eine Schichtbreite von ungefähr 37 mm oder 33 mm auf. Durch diese geometrischen Abmessungen der Dämmschichten ist es möglich, dass die Dämmschichtanordnung in einem Standardfenster bei maximaler Fensterglasgröße, d.h. minimaler Abmessung des Flügelrahmens, untergebracht werden kann, wobei eine hohe Festigkeit und eine gute Wärmedämmung ermöglicht wird. Wie für den Fachmann ersichtlich ist, sind geringe Abweichungen im Rahmen der Erfindung möglich.

Zusätzlich zu der guten Wärmedämmung und hohen Festigkeit wird durch die erfindungsgemäße Struktur des Flügelrahmens eine gute Entwässerung der Verglasung ermöglicht. Darüber hinaus sind die Dämmschichten vor dem Eindringen von Insekten geschützt. Bei bekannten Flügelrahmen sind zur Entwässerungen Bohrungen bzw. Löcher nach außen notwendig, durch welche Insekten in den Flügelrahmen eindringen und über die Jahre die Dämmschichten zerstören können. Für die Entwässerung des erfindungsgemäßen Flügelrahmens sind keine Löcher in den Dämmschichten notwendig, was eine gute Hinterlüftung ermöglicht. Des weiteren ist der Alurahmen ohne ein Klebemittel an dem Flügelrahmen befestigt, so dass ein einfacher Austausch des Fensterglases möglich ist. Der Alurahmen ist fest an dem Fensterflügel befestigt und bleibt frei gestaltbar. Beispielsweise können auf einfache Weise Eckverbinder an dem Alurahmen angebracht werden.

Die vorliegende Erfindung betrifft ferner einen Blendrahmen für ein Fenstersystem mit einem Flügelrahmen, mit einer zwischen zwei Holzprofilen liegenden Dämmstofflagenanordnung, wobei die Dämmstofflagenanordnung aufweist mindestens eine erste Dämmschicht, die auf hohe Festigkeit ausgelegt ist, mindestens eine zweite Dämmschicht, die auf hohe Wärmedämmung ausgelegt ist, und mindestens eine dritte Dämmschicht, die auf hohe Festigkeit ausgelegt ist, wobei die zweite Dämmschicht zwischen der ersten und dritten Dämmschicht liegt.

Die vorliegende Erfindung betrifft ferner ein Fenstersystem mit einem erfindungsgemäßen Blendrahmen und einem dazugehörigen erfindungsgemäßen Flügelrahmen.

Die Erfindung wird im folgenden anhand der beiliegenden Figuren beispielhaft erläutert. Es stellen dar:
- Fig. 1: eine geschnittene Ansicht eines erfindungsgemäßen Fensters bestehend aus einem Flügelrahmen und einer Fensterzarge;
- Fig. 2: eine Schnittansicht des erfindungsgemäßen Flügelrahmens gemäß Fig. 1;
- Fig. 3: eine Schnittansicht der erfindungsgemäßen Fensterzarge gemäß Fig. 1; und
- Fig. 4: eine Schnittansicht eines weiteren erfindungsgemäßen Flügelrahmens gemäß Fig. 1.

Für gleiche Elemente werden in den Zeichnungen die gleichen Bezugszeichen verwendet.

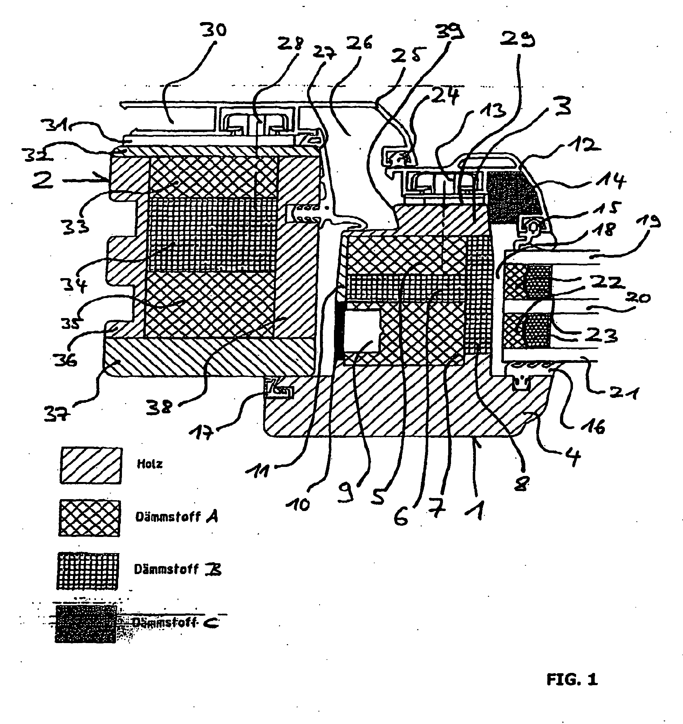

In Fig. 1 ist eine beispielhafte Ausführungsform eines erfindungsgemäßen Fensters gezeigt. Das Fenster umfasst einen Flügelrahmen 1 und eine Fensterzarge 2. Der erfindungsgemäße Flügelrahmen 1 für ein Glasfenster oder eine Glastür besteht aus einem bei geschlossenem Fenster an der äußeren Seite angeordneten Holzprofil 3 und ein in den Innenraum gerichtetes Holzprofil 4. Bei dem Holz handelt es sich bevorzugt um ein Nadelholz. Es kann auch ein Laubholz verwendet werden. Zwischen den beiden Holzprofilen 3 und 4 ist eine Dämmstofflagenanordnung enthaltend eine erste Dämmschicht 5, eine zweite Dämmschicht 6 und eine dritte Dämmschicht 7 angeordnet. Seitlich neben der Dämmstofflagenanordnung 5, 6, 7 ist eine seitliche Dämmschicht 8 zwischen der Dämmschichtlagenanordnung 5, 6, 7 und den drei Fenstergläsern 19, 20, 21 angeordnet. Die vorliegende Erfindung ist nicht auf drei Fenstergläser beschränkt. Es ist auch denkbar, zwei Fenstergläser zu verwenden. Die erste 5 und dritte Dämmschicht 7 bestehen aus einem Dämmstoff A, der auf hohe Festigkeit ausgelegt ist. Die zweite Dämmschicht 7 und die seitliche Dämmschicht 8 bestehen aus einem Dämmstoff B, der auf hohe Wärmedämmung ausgelegt ist. Die drei Dämmschichten 5, 6, 7 sind mit Hilfe eines Klebemittels haftfest miteinander verbunden. Die seitliche Dämmschicht 8 ist ebenfalls mit Hilfe eines Klebemittels an der seitlichen Fläche der ersten Dämmschicht 5, der seitlichen Fläche der zweiten Dämmschicht 6 und Teilen der seitlichen Fläche der dritten Dämmschicht 7 angebracht. Wie aus der Fig. 1 ersichtlich ist, deckt die seitliche Dämmschicht 8 die Verbindungsstellen zwischen erster Dämmschicht 5 und zweiter Dämmschicht 6 bzw. zweiter Dämmschicht 6 und dritter Dämmschicht 7 ab. Hierdurch werden die hinsichtlich Wärmedämmung und Festigkeit schwächsten Stellen der Dämmstofflagenanordnung 5, 6, 7 durch die seitliche Dämmschicht 8 abgedeckt.

Das Holzprofil 3 ist mit Hilfe eines Klebemittels mit der ersten Dämmschicht 5 und der seitlichen Dämmschicht 8 verbunden. Das Holzprofil 3 weist zusätzlich eine Tropfkante 39 zur Entwässerung auf. Auch das Holzprofil 4 ist mit Hilfe eines Klebemittels mit der dritten Dämmschicht 7 und der seitlichen Dämmschicht 8 verbunden. Zusätzlich weist das Holzprofil 4 eine Nut auf, in der die dritte Dämmschicht 7 gehalten wird. Dies liefert eine weitere Stabilität der Anordnung. An der dem seitlichen Profil 8 gegenüberliegenden Seite weist die Dämmstofflagenanordnung 5, 6, 7 ein weiteres Holzprofil 11 auf. Dieses Holzprofil 11 ist mit Hilfe eines Klebemittels an der ersten Dämmschicht 5 und der zweiten Dämmschicht 6 befestigt. In der dritten Dämmschicht 7 befindet sich eine Nut, in der Fensterbeschläge 9 gehalten werden. Die Nut bzw. die Fensterbeschläge 9 werden durch ein Schließblech 10 abgedeckt.

In dem Zwischenraum 18 zwischen der seitlichen Dämmschicht 8 und den Fenstergläsern 19, 20, 21 befinden sich zwei Abstandselemente (nicht gezeigt). Die Fenstergläser 19, 20, 21 weisen an ihren Enden Isolationselemente 22 und Endstücke 23 auf. Die Fenstergläser 19, 20, 21 sind über ein Dichtungselement 16 mit dem unteren Holprofil 4 und über ein Dichtungselement 15 mit einem Alurahmen 12 verbunden. In einem Freiraum 14 unter dem Alurahmen 12 ist ein zusätzlicher Dämmstoff C angeordnet. Der Alurahmen 12 ist mit Hilfe eines Drehverbinders 13 abnehmbar mit dem Flügelrahmen 1 verbunden. Der Drehverbinder 13 greift über ein Zwischenelement 29 in das obere Holzprofil 3 ein. Durch Drehen des Drehverbinders 13 kann der Alurahmen 12 auf einfache Weise von dem Flügelrahmen 1 abgenommen werden. Der Alurahmen 12 ist nicht mit dem Flügelrahmen 1 verklebt.

Die Fensterzarge 2 ist mit dem Flügelrahmen 1 über Dichtungselemente 17, 24, 27 verbunden. Die Fensterzarge 2 besteht aus einer von zwei Holzprofilen 32 und 37 umfassten Dämmstofflagenanordnung mit einer ersten Dämmschicht 33, einer zweiten Dämmschicht 34 und einer dritten Dämmschicht 35. Die erste 33 und dritte Dämmschicht 35 bestehen aus einem Dämmstoff A, der auf hohe Festigkeit ausgelegt. Die dazwischenliegende zweite Dämmschicht 34 besteht aus einem Dämmstoff B, der auf hohe Wärmedämmung ausgelegt ist. Seitlich an der Dämmstofflagenanordnung 33, 34, 35 sind zwei Holzprofile 36 und 38 angeordnet. Die Holzprofile 32, 36, 37, 38 und die Dämmschichten 33, 34, 35 sind mit Hilfe eines Klebemittels haftfest miteinander verbunden. Das Dichtungselement 27 ist mit Hilfe von Presshaftung in einer Nut des Holzprofils 38 befestigt. Der Alurahmen 25 der Fensterzarge 2 ist mit Hilfe eines Drehverbinders 28 über ein Abstandselement 31 mit dem Holzprofil 32 verbunden. Mit Hilfe des Drehverbinders 28 kann der Alurahmen 25 auf einfache Weise von der Fensterzarge 2 abgenommen werden. Unter dem Alurahmen 25 befinden sich Freiräume 26 und 30. Der Alurahmen 25 ist nicht mit der Fensterzarge 2 verklebt.

Wie aus Fig. 1 ersichtlich ist, weist der erfindungsgemäße Flügelrahmen bei geschlossenem Fenster keine Öffnung nach außen auf. Somit können keine Insekten in den Flügelrahmen eindringen und die Dämmschichten zerstören. Folglich ist der erfindungsgemäße Flügelrahmen auch hinsichtlich der Langlebigkeit optimiert.

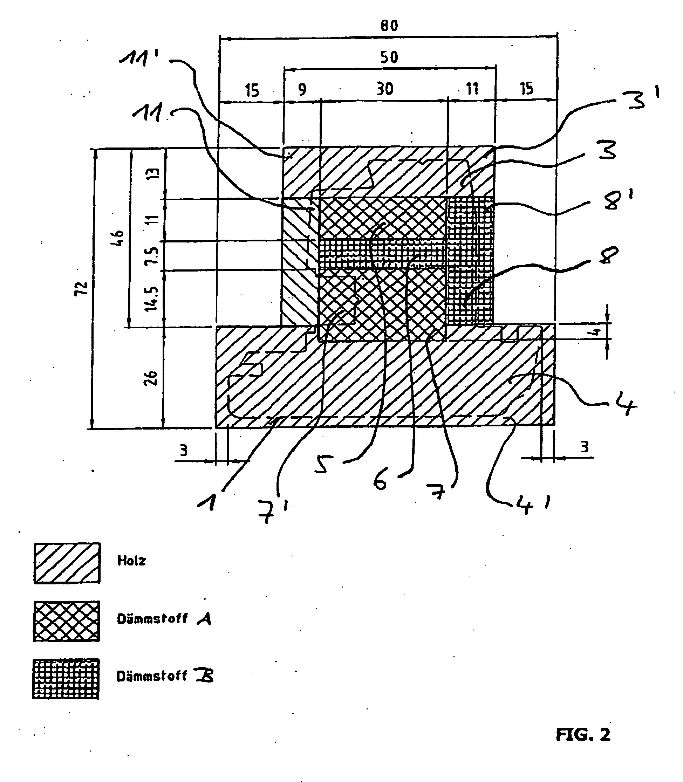

Fig. 2 zeigt eine Schnittansicht des Flügelrahmens 1 gemäß Fig. 1. Aus Fig. 2 ist auch die Herstellung des Flügelrahmens 1 ersichtlich. Die dicken äußeren Linien stellen dabei die Rohform und die dünnen gestrichelten Linien die Endform des Flügelrahmens dar. Zur Herstellung des Flügelrahmens 1 werden die Dämmschichten 5, 6 und 7' mit Hilfe eines Klebemittels haftfest miteinander verbunden. Anschließend wird die seitliche Dämmschicht 8' mit Hilfe eines Klebemittels haftfest seitlich an den Dämmschichten 5, 6 und 7' befestigt. Holzprofile 3', 11' und 4' werden als Ummantelung um Teile der Dämmschichten 5', 6', 7' und 8' angebracht.

Zur Herstellung der endgültigen Form des Flügelrahmens 1 wird zuerst das Holzprofil 4' abgefräst, so das die endgültige Form 4, wie in Fig. 2 durch die gestrichelte Linie gezeigt, übrig bleibt. Als nächster Schritt wird das Holzprofil 11' mit Hilfe einer Fräse bearbeitet, so dass das Holzprofil 11 entsteht. Zusätzlich wird in der dritten Dämmschicht 7' eine Nut ausgenommen, so dass das Profil der dritten Dämmschicht 7 entsteht. Als nächster Schritt wird die seitliche Dämmschicht 8' so bearbeitet, dass das Profil der seitlichen Dämmschicht 8 entsteht. Als letzter Schritt wird mit Hilfe einer Fräse das Holzprofil 3' bearbeitet, so dass das Holzprofil 3 entsteht.

Somit kann mit einer Fräse auf einfache Weise das endgültige Profil des Flügelrahmens hergestellt werden. Da die meisten Außenprofile aus Holz bestehen, kann auf teuere Werkzeuge, wie beispielsweise solche, die zur Bearbeitung von Kunststoff notwendig sind, verzichtet werden. Durch die einfache Bearbeitbarkeit des Holzes ist eine kostengünstige und zeitoptimierte Herstellung des Flügelrahmens möglich. In Fig. 2 sind des weiteren Abmessung einer bevorzugten Ausführungsform eines Flügelrahmens in der Einheit Millimeter angegeben.

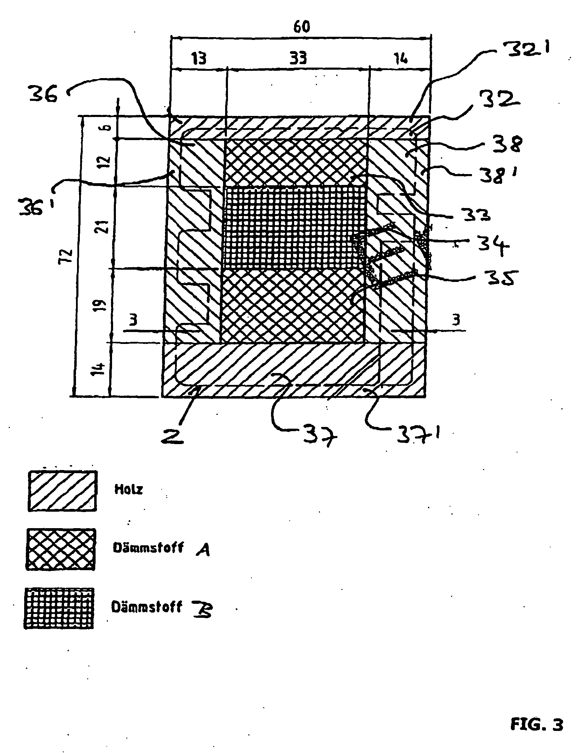

Fig. 3 zeigt eine Schnittansicht der Fensterzarge 2 gemäß Fig. 1. Aus Fig. 3 ist die Herstellung der Fensterzarge 2 ersichtlich. Die dicken äußeren Linien stellen dabei die Rohform und die dünnen gestrichelten Linien die Endform des Fensterzarge dar. Ähnlich wie bei dem Flügelrahmen gemäß Fig. 2 werden zur Herstellung der Fensterzarge 2 die drei Dämmschichten 33, 34, 35 miteinander verklebt. Bei den Dämmschichten 33 und 35 handelt es sich um Dämmschichten, die auf hohe Festigkeit ausgelegt sind und bei der Dämmschicht 34 handelt es sich um eine Dämmschicht, die auf hohe Wärmedämmung ausgelegt ist. Anschließend werden mit Hilfe eines Klebemittels Holzprofile 32', 36', 37', 38' um die Dämmstofflagenanordnung 33, 34, 35 befestigt. Mit Hilfe einer Holzfräse werden die Holzprofile 32', 36', 37', 38' in die gewünschten Formen 32, 36, 37, 38 gebracht. In Fig. 3 sind des weiteren Abmessung einer bevorzugten Ausführungsform einer Fensterzarge in der Einheit Millimeter angegeben.

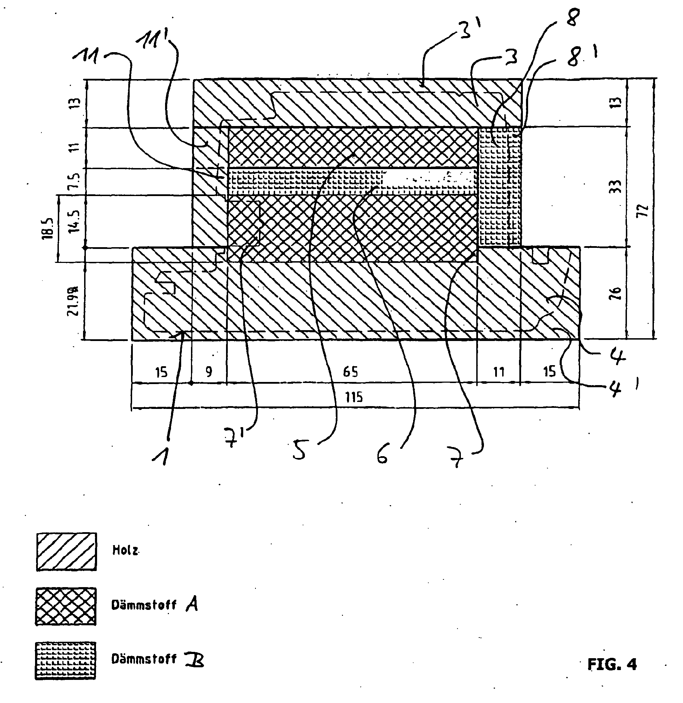

Fig. 4 zeigt eine alternative Schnittansicht des Flügelrahmens 1 gemäß Fig. 1. Der Flügelrahmen gemäß Fig. 4 entspricht im Wesentlichen dem Flügelrahmen gemäß Fig. 2, wobei sich die Abmessungen der Holzprofile und Dämmschichten unterscheiden. Die dicken äußeren Linien stellen dabei wiederum die Rohform und die dünn gestrichelten Linien die Endform des Flügelrahmens nach Bearbeitung, zum Beispiel mit einer Fräse, dar. In Fig. 4 sind die Abmessungen des Flügelrahmens bzw. der Holzprofile und Dämmschichten in der Einheit Millimeter angegeben.

Wie aus den Fig. 2, 3 und 4 ersichtlich ist, können der Flügelrahmen 1 und die Fensterzarge 2, insbesondere durch die Holzummantelung, auf kostengünstige Weise hergestellt werden, da auf teure Bearbeitungswerkzeuge verzichtet werden kann. Mit Hilfe der vorliegenden Erfindung ist es möglich, ein hoch wärmegedämmtes Fenstersystem mit Blendrahmen und Flügelkantel bereitzustellen, welche zusätzlich zur hohen Wärmedämmung eine optimierte Festigkeit aufweisen.

## Patentansprüche

1. Flügelrahmen (1) für ein Glasfenster (19, 20, 21) oder eine Glastür, mit einer zwischen zwei Holzprofilen (3, 4) liegenden Dämmstofflagenanordnung, wobei die Dämmstofflagenanordnung aufweist:
mindestens eine erste Dämmschicht (5), die auf hohe Festigkeit ausgelegt ist, und
mindestens eine zweite Dämmschicht (6), die auf hohe Wärmedämmung ausgelegt ist, wobei
zwischen der Dämmstofflagenanordnung (5, 6) und dem Glasfenster (19, 20, 21) oder der Glastür Abstandselemente angeordnet sind, **dadurch gekennzeichnet, dass**
sich zwischen den zwei Holzprofilen (3, 4) im wesentlichen senkrecht zu der Erstreckungsrichtung der Dämmstofflagenanordnung (5, 6) eine zusätzliche seitliche Dämmschicht (8) erstreckt, die auf hohe Wärmedämmung ausgelegt ist, wobei die zusätzliche seitliche Dämmschicht (8) zwischen der Dämmstofflagenanordnung (5, 6) und den Abstandselemente angeordnet ist.

2. Flügelrahmen nach Anspruch 1, wobei
die Dämmstofflagenanordnung ferner eine dritte Dämmschicht (7) aufweist, die auf hohe Festigkeit ausgelegt ist, wobei die zweite Dämmschicht (6) zwischen der ersten (5) und dritten Dämmschicht (7) liegt.

3. Flügelrahmen nach Anspruch 2, wobei
die dritte Dämmschicht (7) in einer Nut einer der beiden Holzprofile (4) eingesetzt ist.

4. Flügelrahmen nach Anspruch 1 bis 3, wobei
die seitliche Dämmschicht (8) zumindest an der ersten (5) und zweiten (6) oder der zweiten (6) und dritten (7) Dämmschicht anliegt und mindestens eine der seitlichen Nahtstellen zwischen der ersten (5) und zweiten (6) oder der zweiten (6) und dritten (7) Dämmschicht abdeckt.

5. Flügelrahmen nach Anspruch 1 bis 3, wobei
die seitliche Dämmschicht (8) und die Dämmschichten der Dämmstofflagenanordnung (5, 6, 7) mit Hilfe eines Klebemittels haftfest verbunden sind.

6. Flügelrahmen nach einem der Ansprüche 1 bis 5, wobei
die seitliche Dämmschicht (8) zwischen der Verglasung (19, 20, 21) des Fensters oder der Tür und der Dämmstofflagenanordnung (5, 6, 7) angeordnet ist.

7. Flügelrahmen nach einem der Ansprüche 1 bis 6, wobei
zwischen der seitlichen Dämmschicht (8) und der Verglasung (19, 20, 21) des Glasfensters oder der Glastür Abstandselemente angeordnet sind.

8. Flügelrahmen nach einem der Ansprüche 1 bis 7, wobei
die Dämmschichten der Dämmstofflagenanordnung (5, 6, 7) mit Hilfe eines Klebemittels haftfest miteinander verbunden sind.

9. Flügelrahmen nach einem der Ansprüche 1 bis 8, wobei
die Dämmstofflagenanordnung (5, 6, 7) zumindest teilweise an ihrer der seitlichen Dämmschicht (8) gegenüberliegenden Seite von einem dritten Holzprofil (11) abgedeckt ist.

10. Flügelrahmen nach einem der Ansprüche 1 bis 9, wobei
der Flügelrahmen (1) bei der Herstellung zumindest an den Stellen mit einer Fräse bearbeitet wurde, an denen er eine Holzummantelung (3, 4, 11) aufweist.

11. Flügelrahmen nach einem der Ansprüche 1 bis 10, wobei
die dritte Dämmschicht (7) an ihrer der seitlichen Dämmschicht (8) gegenüberliegenden Seite eine Nut aufweist, in der Fensterbeschläge (9) angeordnet sind, wobei die Fensterbeschläge (9) nach außen von einem Schließblech (10) abgedeckt sind.

12. Flügelrahmen nach einem der Ansprüche 1 bis 11, mit ferner
einem abnehmbaren Alurahmen (12), der bei geschlossenem Glasfenster bzw. geschlossener Glastür über zwei Dichtungselemente (15, 24) eine äußere Abdeckung des Bereichs zwischen Verglasung (19, 20, 21) und Alurahmen (25) der zum Flügelrahmen gehörigen Fensterzarge (2) bereitstellt.

13. Flügelrahmen nach einem der Ansprüche 1 bis 12, wobei
das an der ersten Dämmschicht (5) anliegende Holzprofil (3) eine Tropfkante (39) aufweist.

14. Flügelrahmen nach einem der Ansprüche 1 bis 13, wobei
die erste (5) und dritte (7) Dämmschicht aus einem hochdruckfesten Polyurethan-Hartschaum mit einer Massendichte von 400 kg/m³ bis 600 kg/m³, insbesondere 450 kg/m³, und die zweite (6) und die seitliche (8) Dämmschicht aus einem Polyurethan-Hartschaum mit einer Massendichte von 60 kg/m³bis 200 kg/m³, insbesondere 80 kg/m³, bestehen.

15. Flügelrahmen nach einem der Ansprüche 1 bis 14, wobei
die erste (5) Dämmschicht eine Schichttiefe von ungefähr 11 mm, die zweite (6) Dämmschicht eine Schichttiefe von ungefähr 7,5 mm, die dritte (7) Dämmschicht eine Schichttiefe von ungefähr 18,5 mm und die seitliche (8) Dämmschicht eine Schichttiefe von ungefähr 11 mm aufweist.

16. Flügelrahmen nach einem der Ansprüche 1 bis 15, wobei
die erste (5), zweite (6) und dritte (7) Dämmschicht eine Schichtbreite von ungefähr 30 mm oder 65 mm und die seitliche (8) Dämmschicht eine Schichtbreite von ungefähr 37 mm oder 33 mm aufweist.

## Claims

1. Casement (1) for a glass window (19, 20, 21) or a glass door, having an insulation material layer arrangement which is located between two wooden profile-members (3, 4),
the insulation material layer arrangement comprising:
at least a first insulation layer (5) which is constructed for a high level of strength and at least a second insulation layer (6) which is constructed for a high level of thermal insulation,
spacers being arranged between the insulation material layer arrangement (5, 6) and the glass window (19, 20, 21) or the glass door, **characterised in that**, between the two wooden profile-members (3, 4), there extends in a substantially perpendicular manner relative to the extension direction of the insulation material layer arrangement (5, 6) an additional lateral insulation layer (8), which is constructed for a high level of thermal insulation, the additional lateral insulation layer (8) being arranged between the insulation material layer arrangement (5, 6) and the spacers.

2. Casement according to claim 1,
the insulation material layer arrangement further having a third insulation layer (7) which is constructed for a high level of strength, the second insulation layer (6) being located between the first insulation layer (5) and third insulation layer (7).

3. Casement according to claim 2,
the third insulation layer (7) being inserted in a groove of one of the two wooden profile-members (4).

4. Casement according to claim 1 to 3,
the lateral insulation layer (8) abutting at least the first (5) and second (6) or the second (6) and third (7) insulation layer and covering at least one of the lateral seam locations between the first (5) and second (6) or the second (6) and third (7) insulation layer.

5. Casement according to claim 1 to 3,
the lateral insulation layer (8) and the insulation layers of the insulation material layer arrangement (5, 6, 7) being adhesively-bonded by means of an adhesive-bonding agent.

6. Casement according to one of claims 1 to 5,
the lateral insulation layer (8) being arranged between the glazing (19, 20, 21) of the window or the door and the insulation material layer arrangement (5, 6, 7).

7. Casement according to one of claims 1 to 6,
spacer elements being arranged between the lateral insulation layer (8) and the glazing (19, 20, 21) of the glass window or the glass door.

8. Casement according to one of claims 1 to 7,
the insulation layers of the insulation material layer arrangement (5, 6, 7) being adhesively-bonded to each other by means of an adhesive-bonding agent.

9. Casement according to one of claims 1 to 8,
the insulation material layer arrangement (5, 6, 7) being at least partially covered, at the side thereof facing the lateral insulation layer (8), by a third wooden profile-member (11).

10. Casement according to one of claims 1 to 9,
the casement (1) having been machined during production with a milling cutter, at least at those locations at which it has a wood covering (3, 4, 11).

11. Casement according to one of claims 1 to 10,
the third insulation layer (7) having, at the side thereof facing the lateral insulation layer (8), a groove in which window fittings (9) are arranged, the window fittings (9) being outwardly covered by a closure plate (10).

12. Casement according to one of claims 1 to 11, further having a removable aluminium frame (12) which, when the glass window or glass door is closed, provides an outer covering of the region between the glazing (19, 20, 21) and aluminium frame (25) of the window frame (2) which is associated with the casement by means of two sealing elements (15, 24).

13. Casement according to one of claims 1 to 12, the wooden profile-member (3) which abuts the first insulation layer (5) having a drip edge (39).

14. Casement according to one of claims 1 to 13, the first (5) and third (7) insulation layer comprising a high-pressure-resistant polyurethane hard foam having a mass density of from 400 kg/m³ to 600 kg/m³, in particular 450 kg/m³, and the second (6) insulation layer and the lateral insulation layer (8) comprising a polyurethane hard foam having a mass density of from 60 kg/m³ to 200 kg/m³, in particular 80 kg/m³.

15. Casement according to one of claims 1 to 14,
the first insulation layer (5) having a layer depth of approximately 11 mm, the second insulation layer (6) having a layer depth of approximately 7.5 mm, the third insulation layer (7) having a layer depth of approximately 18.5 mm and the lateral insulation layer (8) having a layer depth of approximately 11 mm.

16. Casement according to one of claims 1 to 15,
the first (5), second (6) and third (7) insulation layer having a layer width of approximately 30 mm or 65 mm and the lateral insulation layer (8) having a layer width of approximately 37 mm or 33 mm.

## Revendications

1. Châssis de battant (1) pour une fenêtre vitrée (19, 20, 21) ou une porte vitrée, comprenant un agencement de couches de matériau isolant placé entre deux profilés de bois (3, 4), l'agencement de couches de matériau isolant présentant :
au moins une première couche isolante (5) qui est conçue pour être d'une résistance élevée, et au moins une deuxième couche isolante (6) qui est conçue pour présenter une isolation thermique élevée,
des éléments entretoises étant agencés entre l'agencement de couches de matériau isolant (5, 6) et la fenêtre vitrée (19, 20, 21) ou la porte vitrée,
**caractérisé en ce que**
entre les deux profilés de bois (3, 4) s'étend, sensiblement de manière perpendiculaire à la direction de l'étendue de l'agencement de couches de matériau isolant (5, 6), une couche isolante latérale (8) supplémentaire qui est conçue pour présenter une isolation thermique élevée, la couche isolante latérale (8) supplémentaire étant agencée entre les éléments entretoises et l'agencement de couches de matériau isolant (5, 6)

2. Châssis de battant selon la revendication 1, dans lequel
l'agencement de couches de matériau isolant présente par ailleurs une troisième couche isolante (7) qui est conçue pour être d'une résistance élevée, la deuxième couche isolante (6) étant placée entre la première (5) et la troisième couche isolante (7).

3. Châssis de battant selon la revendication 1, dans lequel
la troisième couche isolante (7) est insérée dans une rainure de l'un des deux profilés de bois (4).

4. Châssis de battant selon les revendications 1 à 3, dans lequel
la couche isolante latérale (8) s'appuie au moins contre la première (5) et la deuxième (6) ou la deuxième (6) et la troisième (7) couche isolante, et recouvre au moins l'une des zones latérales de jointure entre la première (5) et la deuxième (6) ou la deuxième (6) et la troisième (7) couche isolante.

5. Châssis de battant selon les revendications 1 à 3, dans lequel
la couche isolante latérale (8) et les couches isolantes de l'agencement de couches de matériau isolant (5, 6, 7) sont reliées de manière résistante par adhésivité, à l'aide d'un agent de collage.

6. Châssis de battant selon l'une des revendications 1 à 5, dans lequel
la couche isolante latérale (8) est agencée entre le vitrage (19, 20, 21) de la fenêtre ou de la porte et l'agencement de couches de matériau isolant (5, 6, 7).

7. Châssis de battant selon l'une des revendications 1 à 6, dans lequel
entre la couche isolante latérale (8) et le vitrage (19, 20, 21) de la fenêtre vitrée ou de la porte vitrée, sont agencés des éléments entretoises.

8. Châssis de battant selon l'une des revendications 1 à 7, dans lequel
les couches isolantes de l'agencement de couches de matériau isolant (5, 6, 7) sont reliées de manière résistante par adhésivité, à l'aide d'un agent de collage.

9. Châssis de battant selon l'une des revendications 1 à 8, dans lequel
l'agencement de couches de matériau isolant (5, 6, 7) est recouvert au moins partiellement, sur son côté opposé à celui où se trouve la couche isolante latérale (8), par un troisième profilé de bois (11).

10. Châssis de battant selon l'une des revendications 1 à 9, dans lequel
le châssis de battant (1), lors de la fabrication, a été usiné par une fraise au moins aux endroits où il présente une enveloppe de bois (3, 4, 11).

11. Châssis de battant selon l'une des revendications 1 à 10, dans lequel
la troisième couche isolante (7) présente, sur son côté opposé à celui où se trouve la couche isolante latérale (8), une rainure dans laquelle sont agencées des ferrures de fenêtre (9), les ferrures de fenêtres (9) étant recouvertes en direction de l'extérieur par une tôle de fermeture (10).

12. Châssis de battant selon l'une des revendications 1 à 11, comprenant par ailleurs
un châssis amovible (12) en aluminium qui, lorsque la fenêtre vitrée ou la porte vitrée est fermée, assure, par l'intermédiaire de deux éléments de joints d'étanchéité (15, 24), un recouvrement extérieur de la zone entre le vitrage (19, 20, 21) et le châssis en aluminium (25) de l'huisserie de fenêtre (2) associée au châssis de battant.

13. Châssis de battant selon l'une des revendications 1 à 12, dans lequel
le profilé de bois (3) appliqué contre la première couche isolante (5) présente un bord profilé en rejet d'eau (39).

14. Châssis de battant selon l'une des revendications 1 à 13, dans lequel
la première (5) et la troisième (7) couche isolante sont réalisées en une mousse dure de polyuréthanne hautement résistante à la pression et présentant une masse volumique de 400 kg/m³ à 600 kg/m³, notamment de 450 kg/m³, et la deuxième couche isolante (6) et la couche isolante latérale (8) sont réalisées en une mousse dure de polyuréthanne d'une masse volumique de 60 kg/m³ à 200 kg/m³, notamment de 80 kg/m³.

15. Châssis de battant selon l'une des revendications 1 à 14, dans lequel
la première couche isolante (5) présente une épaisseur de couche d'environ 11 mm, la deuxième couche isolante (6) une épaisseur de couche d'environ 7,5 mm, la troisième couche isolante (7) une épaisseur de couche d'environ 18,5 mm, et la couche isolante latérale (8) une épaisseur de couche d'environ 11 mm.

16. Châssis de battant selon l'une des revendications 1 à 15, dans lequel
la première (5), la deuxième (6) et la troisième (7) couche isolante présentent une largeur de couche d'environ 30 mm ou 65 mm, et la couche isolante latérale (8) une largeur de couche d'environ 37 mm ou 33 mm.
